# EUROPÄISCHE PATENTANMELDUNG

(11) **EP 0 240 961 A1**
(43) Veröffentlichungstag der Anmeldung: **14.10.1987**
(21) Anmeldenummer: 87105031.6
(22) Anmeldetag: 04.04.1987
(51) Int. Cl.: B60S 1/38

(54) **Scheibenwischer mit verkleinerter Frontfläche**

(30) Priorität: 09.04.1986 FR 8605053
(71) Anmelder: PAUL JOURNEE S.A., F-92400 Courbevoie (FR)
(72) Erfinder: Duda, Jean, F-60175 Villeneuve les Sablons (FR); Journée, Maurice, F-60240 Chaumont en Vexin (FR)
(74) Vertreter: Cohausz & Florack Patentanwälte

(57) **Zusammenfassung**

Die Erfindung betrifft einen Scheibenwischer, bestehend aus einer verformbaren Konstruktion zum Tragen eines Wischblatts, die gebildet wird durch aneinander angelenkte Brücken und Mittel zum Befestigen an einem Wischarm. Bestimmte der Brücken (5) sind vorn auf mindestens einem Teil ihrer Länge im Innern einer anderen Brücke (6) verdeckt, die in Längsrichtung gespalten ist.

## Beschreibung

Die Erfindung bezieht sich auf einen Scheibenwischer, der aus einer verformbaren Tragkonstruktion für ein Wischblatt besteht, wobei diese verformbare Konstruktion gebildet wird durch aneinander angelenkte brückenförmige Glieder und Mittel zum Befestigen an einem Wischarm umfaßt.

Bei einem solchen Scheibenwischer begrenzt die Frontfläche der verformbaren Konstruktion die Wischgeschwindigkeit und schafft zudem aerodynamische Erscheinungen, die zu einem Abheben des Wischers neigen, wodurch die Verwendung der Scheibenwischer bei hohen Fahrzeuggeschwindigkeiten eingeschränkt wird.

Ziel der Erfindung ist es, diesen Nachteilen bekannter Scheibenwischer abzuhelfen durch einen neuartigen Scheibenwischer, dessen Konstruktion eine stark verkleinerte Frontfläche aufweist und ihren Einsatz bei hoher Geschwindigkeit ermöglicht.

Deshalb ist der erfindungsgemäße Scheibenwischer dadurch gekennzeichnet, daß bestimmte der brückenförmigen Glieder über mindestens einen Teil ihrer Länge im Innern eines anderen brückenförmigen Glieds verdeckt sind.

Die Fronthöhen der auf diese Weise verdeckten Brücken bieten den senkrecht zum Wischer wirkenden Komponenten der aerodynamischen Kräfte keinen Angriffspunkt.

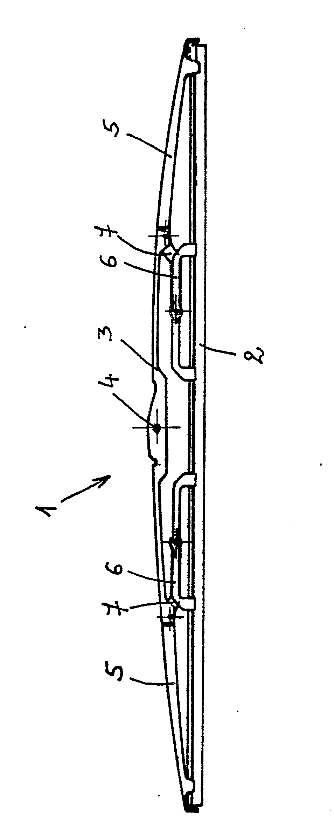

Die Erfindung wird gut verständlich beim Lesen der folgenden Beschreibung unter Bezugnahme auf die beigeheftete Zeichnung, deren einzige Figur eine schematische Seitenansicht eines Wischers nach einer Ausführungsform der Erfindung ist.

Der Scheibenwischer umfaßt eine verformbare Konstruktion 1, die ein Wischblatt 2 trägt. Im dargestellten Beispiel wird die Kontruktion 1 gebildet aus einer großen Brücke 3, die ein Mittel zum Einhaken 4 an einen Wischarm (nicht dargestellt) trägt und an deren Enden Zwischenbrücken 5 angelenkt sind. Die Zwischenbrücken 5 tragen an ihrem äußeren Ende das Wischblatt 2, während ihr inneres Ende an eine kleine Brücke 6 angelenkt ist.

Die kleine Brücke 6 ist mindestens auf ihrer äußeren Hälfte in Längsrichtung gespalten und nimmt in diesen Spalt den inneren Schenkel der Zwischenbrücke 5 über ein Kuppelstück 7 dieses Innenschenkels auf. In Anbetracht der Länge dieses Schenkels bleibt er praktisch bei der Verformung der Konstruktion 1 im Spalt der kleinen Brücke 6 verdeckt.

## Patentansprüche

1. - Scheibenwischer, bestehend aus einer verformbaren Konstruktion zum Tragen eines Wischblatts, die gebildet wird durch aneinander angelenkte Brücken und Mittel zum Befestigen an einem Wischarm umfaßt, dadurch gekennzeichnet, daß bestimmte der Brücken (5) vorn auf mindestens einem Teil ihrer Länge im Innern einer anderen Brücke (6) verdeckt sind, die in Längsrichtung gespalten ist.

2. - Scheibenwischer nach Anspruch 1, dadurch gekennzeichnet, daß die verdeckte Brücke (5) im Innern des Spalts der genannten anderen Brücke angelenkt ist.
